# EUROPEAN PATENT SPECIFICATION

(11) **EP 3 674 363 B1**
(45) Date of publication and mention of the grant of the patent: **21.07.2021**
(21) Application number: 19155650.5
(22) Date of filing: 06.02.2019
(51) Int. Cl.: C08L 23/12

(54) **POLYPROPYLENE MODIFIED MATERIAL, PREPARATION METHOD AND LUGGAGE MADE THEREOF**
POLYPROPYLENMODIFIZIERTES MATERIAL, HERSTELLUNGSVERFAHREN UND DARAUS HERGESTELLTER KOFFER
MATÉRIAU MODIFIÉ DE POLYPROPYLÈNE, SON PROCÉDÉ DE PRÉPARATION ET BAGAGES FABRIQUÉS À PARTIR DE CELUI-CI

(30) Priority: 29.12.2018 CN 201811639669
(43) Date of publication of application: 01.07.2020
(73) Proprietor: ITP (Heyuan) Luggage Co., Ltd, Heyuan City (CN)
(72) Inventor: ZHUANG, Li, Heyuan City (CN)
(74) Representative: Puschmann Borchert Kaiser Klettner Patentanwälte Partnerschaft mbB

(56) References cited:
- EP-A1- 0 699 711
- EP-A1- 2 495 280
- WO-A1-2018/019617

## Description

### TECHNICAL FIELD

The present disclosure relates generally to the technical field of luggage material, and more particularly, to a polypropylene modified material, a preparation method of such polypropylene modified material, and luggage made of such polypropylene modified material.

### BACKGROUND

The polypropylene luggage material with a high-hardness in the current market has a phenomenon of tending to be white when bent. Although some of the luggage materials have avoided to be white when bent, while their hardness cannot satisfy corresponding requirements.

### SUMMARY

The object of the present application is to provide a polypropylene modified material, a preparation method of such polypropylene modified material, and luggage made of such polypropylene modified material, aiming at the above defect of the prior art that the polypropylene luggage material with a high-hardness in the current market turns white when bent.

In another aspect, a preparation method of the above polypropylene modified material is also provided, which comprising mixing the homo-polypropylene, polypropylene copolymer, polyolefin elastomer, polyethylene, nucleating agent, antioxidant, fluidity modifier of above percentage by weight together and stirring obtained mixture uniformly, and then obtaining the polypropylene modified material after melting, plasticizing and cooling the obtained mixture.

In the preparation method of the polypropylene modified material according to the present application, the melting and plasticizing temperature is controlled to be between 180°C-300°C.

In the preparation method of the polypropylene modified material according to the present application, the polypropylene modified material is obtained by melting, plasticizing and cooling the obtained mixture via a single-screw extruder, a twin-The polypropylene modified material of the present application has a high-hardness, a good fluidity and an impact resistance, and would not turn white by bending, depressing, impacting, and extruding operations. In additional, the luggage made of such polypropylene modified material would not turn white even after more than 1000 times of bending or impacting by an object heavier than 5 kilograms.

### DETAILED DESCRIPTION OF THE PREFERRED EMBODIMENT

In order to clarify the objects, technical solutions and advantages of the embodiments of the present application, the following detailed description will be made for the polypropylene modified material, a preparation method of such polypropylene modified material, and luggage made of such polypropylene modified material of the present application.

The present application relates to luggage made of polypropylene modified material, and more particularly, to luggage which is injection-molded by polypropylene modified material melted between 200°C -230°C.
the polypropylene modified material comprises components of following percentage by weight: homo-polypropylene (Homo PP) 10-40wt%, polypropylene copolymer (Copo PP) 35-60wt%, polyolefin elastomer (POE) 5-15wt%, polyethylene (PE) 10-20wt%, nucleating agent 0.03-0.08wt%, antioxidant 0.03-0.06wt%, and fluidity modifier 2-6wt%.

In a preferable embodiment, the polypropylene modified material comprises components of following percentage by weight: homo-polypropylene 15-35wt%, polypropylene copolymer 40-55wt%, polyolefin elastomer 7-11wt%, polyethylene 12-17wt%, nucleating agent 0.04-0.06wt%, antioxidant 0.035-0.045wt%, and fluidity modifier 3-5wt%.

In a more preferable embodiment, the polypropylene copolymer is random polypropylene copolymer.

In a more preferable embodiment, the nucleating agent is TH-3988 having the chemical name of 1,3:2,4-Bis(3,4-dimethylobenzylideno) sorbitol, the molecular weight of 414.49, the molecular formula is C₂₄H₃₀O₆, the CAS number of 135861-56-2, and the structural formula of:

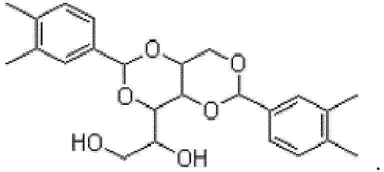

In a more preferable embodiment, the fluidity modifier is PETS fluidity modifier, that is, pentaerythrityl tetrastearate.

In a more preferable embodiment, the antioxidant comprises an antioxidant 168 and an antioxidant 1010 having a mass ratio of 1:1.

The antioxidant 168 is a phosphite antioxidant having the chemical name of Tns-(2.4-di-tert-butyl)-phosphite, the molecular weight of 648, the molecular formula of C₄₂H₆₃O₃P, the CAS number of 31570-04-4, and the structural formula of:

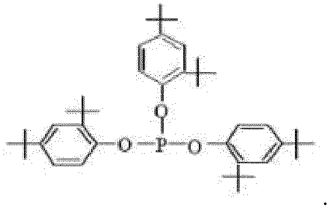

The antioxidant 1010 is a hindered phenolic antioxidant of a high molecular weight having the chemical name of pentaerythritol tetrakis(3-(3,5-di-tert-butyl-4-hydroxyphenyl)propionate), the molecular weight of 1177.6, the molecular formula of C₇₃H₁₀₈O₁₂, the CAS number of 6683-19-8, and the structural formula of:

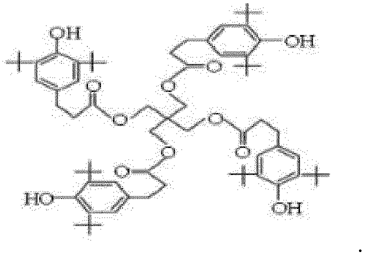

The preparation method of the above polypropylene modified material comprises mixing the homo-polypropylene, polypropylene copolymer, polyolefin elastomer, polyethylene, nucleating agent, antioxidant, fluidity modifier of above percentage by weight together and stirring obtained mixture uniformly, and then obtaining the polypropylene modified material after melting, plasticizing and cooling the obtained mixture. In a preferable embodiment, the melting and plasticizing temperature is controlled to be between 180°C-300°C, more preferable between 180°C-220°C.

In a preferable embodiment, the polypropylene modified material is obtained by melting, plasticizing and cooling the obtained mixture via a single-screw extruder, a twin-screw extruder, or a plug-in extruder.

In a more preferable embodiment, a twin-screw extruder, such as the type 65 machine produced by Dongguan Yuanchun Plastic Machinery Co., Ltd., is employed. During the operation, the rotate speed of the main engine can be 1100-1300 rpm, the rotate speed of the feeding machine can be 700-900rpm, while the rotate speed of the granulator can be 25-35 rpm. In a further more preferable embodiment, during the operation, the rotate speed of the main engine can be 1200 rpm, the rotate speed of the feeding machine can be 800rpm, while the rotate speed of the granulator can be 32 rpm. The obtained mixture successively goes through the charging barrel of the twin-screw extruder having eleven temperature zones, which including a first temperature zone having a temperature range of 180°C-185°C, a second temperature zone having a temperature range of 185°C-195°C, a third temperature zone having a temperature range of 185°C-195°C, a fourth temperature zone having a temperature range of 195°C-205°C, a fifth temperature zone having a temperature range of 205 °C-215 °C, a sixth temperature zone having a temperature range of 205 °C -215 °C, a seventh temperature zone having a temperature range of 210°C-220°C, an eighth temperature zone having a temperature range of 210°C-220°C, a ninth temperature zone having a temperature range of 205 °C -215 °C, a tenth temperature zone having a temperature range of 195°C-205°C, and an eleventh temperature zone having a temperature range of 185°C-195°C. In a further more preferable embodiment, the first temperature zone has a temperature of 180°C, the second temperature zone has a temperature of 190°C, the third temperature zone has a temperature of 190°C, the fourth temperature zone has a temperature of 200°C, the fifth temperature zone has a temperature of 210°C, the sixth temperature zone has a temperature of 210°C, the seventh temperature zone has a temperature of 215°C, the eighth temperature zone has a temperature of 215°C, the ninth temperature zone has a temperature of 210°C, the tenth temperature zone has a temperature of 200°C, while the eleventh temperature zone has a temperature of 190°C.

The polypropylene modified material according to the present application is described in detail by the following specific embodiments. Among others, the homo-polypropylene can be the V30G purchased from PetroChina Lanzhou Petrochemical Company, while the polypropylene copolymer can be the R370Y purchased from Korea Hyo Sung Co. Ltd. The polyolefin elastomer and the polyethylene can be the 6502 and 6201XR purchased from Exxon Mobil Corporation, respectively. The antioxidant 168 and antioxidant 1010 are purchased from BASF SE, the fluidity modifier can be A-388 purchased from Shenzhen All Technology CO., LTD, while the nucleating agent can be P-20E purchased from Jining City North Jia Macromolecule material CO., LTD. It should be noted that the other product and manufacturers used are merely illustrative, and different types of auxiliary materials produced by other manufacturers similar to the above-mentioned raw materials also fall into the protection scope of the present application.
1. The raw materials are mixed and stirred uniformly according to the mass ratio of Table 1.

**Table 1:**

| Components | Homo PP | Copo PP | POE | PE | Nucleatin g agent | Antioxida nt 168 | Antioxida nt 1010 | Fluidity modifier |
|---|---|---|---|---|---|---|---|---|
| Embodiment 1 | 15kg | 55 kg | 10 kg | 17 kg | 0.05 kg | 0.02 kg | 0.02 kg | 3 kg |
| Embodiment 2 | 35kg | 40kg | 7kg | 15kg | 0.05kg | 0.02kg | 0.02kg | 3kg |
| Embodiment 3 | 22kg | 50kg | 11kg | 12kg | 0.05kg | 0.02kg | 0.02kg | 5kg |
| Embodiment 4 | 10kg | 35kg | 5kg | 10kg | 0.03kg | 0.015kg | 0.015kg | 2kg |
| Embodiment 5 | 40kg | 60kg | 15kg | 20kg | 0.08kg | 0.03kg | 0.03kg | 6kg |

2. The polypropylene modified material is extruded by the twin-screw extruder. During the operation, the rotate speed of the main engine can be 1200 rpm, the rotate speed of the feeding machine can be 800rpm, while the rotate speed of the granulator can be 32 rpm. The obtained mixture successively goes through the charging barrel of the twin-screw extruder having eleven temperature zones, in which the first temperature zone has a temperature of 180°C, the second temperature zone has a temperature of 190°C, the third temperature zone has a temperature of 190°C, the fourth temperature zone has a temperature of 200°C, the fifth temperature zone has a temperature of 210°C, the sixth temperature zone has a temperature of 210°C, the seventh temperature zone has a temperature of 215°C, the eighth temperature zone has a temperature of 215°C, the ninth temperature zone has a temperature of 210°C, the tenth temperature zone has a temperature of 200°C, while the eleventh temperature zone has a temperature of 190°C.
(3) The polypropylene modified material of embodiments 1-5 and the material used by the prior luggage are compared by a tensile tester, and the obtained experiment data are listed in Table 2.

**Table 2:**

| Data | Impact kj/m² | fluidity g/10min | Bending modulus MPA | Tensile strength MPA | Phenomenon of turning white |
|---|---|---|---|---|---|
| Control embodiment | 25 | 20 | 500 | 18 | Turning white when hitting or bending |
| Embodiment 1 | 50 | 28 | 730 | 28 | Not turning white even after more than 1000 times of bending or impacting by an object heavier than 5 kilograms |
| Embodiment 2 | 42 | 26 | 760 | 26 | Not turning white even after more than 1000 times of bending or impacting by an object heavier than 5 kilograms |
| Embodiment 3 | 56 | 29 | 650 | 25 | Not turning white even after more than 1000 times of bending or impacting by an object heavier than 5 kilograms |
| Embodiment 4 | 46 | 26 | 680 | 26 | Not turning white even after more than 1000 times of bending or impacting by an object heavier than 5 kilograms |
| Embodiment 5 | 50 | 28 | 710 | 28 | Not turning white even after more than 1000 times of bending or impacting by an object heavier than 5 kilograms |

It should be understood that, for one skilled in the art, the foregoing description can be modified or altered, and all such modifications and alterations fall into the scope of the attached claims.

## Claims

1. A polypropylene modified material, **characterized in that**, it comprises components of following percentage by weight: homo-polypropylene 10-40wt%, polypropylene copolymer 35-60wt%, polyolefin elastomer 5-15wt%, polyethylene 10-20wt%, nucleating agent 0.03-0.08wt%, antioxidant 0.03-0.06wt%, and fluidity modifier 2-6wt%.

2. The polypropylene modified material according to claim 1, **characterized in that**, it comprises components of following percentage by weight: homo-polypropylene 15-35wt%, polypropylene copolymer 40-55wt%, polyolefin elastomer 7-11wt%, polyethylene 12-17wt%, nucleating agent 0.04-0.06wt%, antioxidant 0.035-0.045wt%, and fluidity modifier 3-5wt%.

3. The polypropylene modified material according to claim 1 or 2, **characterized in that**, the antioxidant comprises Tris-(2.4-di-tert-butyl)-phosphite and pentaerythritol tetrakis(3-(3,5-di-tert-butyl-4-hydroxyphenyl)propionate).

4. The polypropylene modified material according to claim 3, **characterized in that**, a mass ratio of the Tris-(2.4-di-tert-butyl)-phosphite and the pentaerythritol tetrakis(3-(3,5-di-tert-butyl-4-hydroxyphenyl)propionate) is 1:1.

5. The polypropylene modified material according to claim 1 or 2, **characterized in that**, the nucleating agent is 1,3:2,4-Bis(3,4-dimethylobenzylideno) sorbitol.

6. The polypropylene modified material according to claim 1 or 2, **characterized in that**, the fluidity modifier is PETS fluidity modifier.

7. A preparation method of the polypropylene modified material according to any one of claims 1-6, **characterized in that**, it comprises mixing the homo-polypropylene, polypropylene copolymer, polyolefin elastomer, polyethylene, nucleating agent, antioxidant, fluidity modifier of above percentage by weight together and stirring obtained mixture uniformly, and then obtaining the polypropylene modified material after melting, plasticizing and cooling the obtained mixture.

8. The preparation method of the polypropylene modified material according to claim 7, **characterized in that**, the melting and plasticizing temperature is controlled to be between 180°C-300°C.

9. The preparation method of the polypropylene modified material according to claim 7, **characterized in that**, the polypropylene modified material is obtained by melting, plasticizing and cooling the obtained mixture via a single-screw extruder, a twin-screw extruder, or a plug-in extruder.

10. The preparation method of the polypropylene modified material according to claim 9, **characterized in that**, the polypropylene modified material is extruded by the twin-screw extruder, in which a rotate speed of a main engine of the twin-screw extruder can be 1100-1300 rpm, a rotate speed of a feeding machine of the twin-screw extruder can be 700-900rpm, while a rotate speed of a granulator of the twin-screw extruder can be 25-35 rpm.

11. The preparation method of the polypropylene modified material according to claim 10, **characterized in that**, the rotate speed of the main engine can be 1200 rpm, the rotate speed of the feeding machine can be 800rpm, while the rotate speed of the granulator can be 32 rpm.

12. The preparation method of the polypropylene modified material according to claim 9, **characterized in that**, the obtained mixture successively goes through a charging barrel of the twin-screw extruder having eleven temperature zones, which including a first temperature zone having a temperature range of 180°C-185°C, a second temperature zone having a temperature range of 185°C-195°C, a third temperature zone having a temperature range of 185°C-195°C, a fourth temperature zone having a temperature range of 195°C-205°C, a fifth temperature zone having a temperature range of 205°C-215°C, a sixth temperature zone having a temperature range of 205°C-215°C, a seventh temperature zone having a temperature range of 210°C -220°C, an eighth temperature zone having a temperature range of 210°C - 220°C, a ninth temperature zone having a temperature range of 205 °C -215 °C, a tenth temperature zone having a temperature range of 195°C-205°C, and an eleventh temperature zone having a temperature range of 185°C-195°C.

13. The preparation method of the polypropylene modified material according to claim 12, **characterized in that**, the first temperature zone has a temperature of 180°C, the second temperature zone has a temperature of 190°C, the third temperature zone has a temperature of 190°C, the fourth temperature zone has a temperature of 200°C, the fifth temperature zone has a temperature of 210°C, the sixth temperature zone has a temperature of 210°C, the seventh temperature zone has a temperature of 215°C, the eighth temperature zone has a temperature of 215°C, the ninth temperature zone has a temperature of 210°C, the tenth temperature zone has a temperature of 200°C, while the eleventh temperature zone has a temperature of 190°C.

14. Luggage made of the polypropylene modified material according to any one of claims 1-6.

## Patentansprüche

1. Polypropylenmodifiziertes Material, **dadurch gekennzeichnet, dass** es Komponenten mit folgenden Gewichtsprozenten umfasst: Homo-Polypropylen 10 bis 40 Gew.-%, Polypropylen-Copolymer 35 bis 60 Gew.-%, Polyolefin-Elastomer 5 bis15 Gew.-%, Polyethylen 10 bis 20 Gew.-%, Nukleierungsmittel 0,03 bis 0,08 Gew.-%, Antioxidationsmittel 0,03 bis 0,06 Gew.-% und Fließfähigkeitsmodifizierer 2 bis 6 Gew.-%.

2. Polypropylenmodifiziertes Material nach Anspruch 1, **dadurch gekennzeichnet, dass** es Komponenten mit folgenden Gewichtsprozenten umfasst: Homo-Polypropylen 15 bis 35 Gew.-%, Polypropylen-Copolymer 40 bis 55 Gew.-%, Polyolefin-Elastomer 7 bis 11 Gew.-%, Polyethylen 12 bis 17 Gew.-%, Nukleierungsmittel 0,04 bis 0,06 Gew.-%, Antioxidationsmittel 0,035 bis 0,045 Gew.-% und Fließfähigkeitsmodifizierer 3 bis 5 Gew.-%.

3. Polypropylenmodifiziertes Material nach Anspruch 1 oder 2, **dadurch gekennzeichnet, dass** das Antioxidationsmittel Tris-(2,4-di-tert-butyl)-phospit und Pentaerythrittetrakis(3-(3,5-di-tert-butyl-4-hydroxyphenyl)propionat) umfasst.

4. Polypropylenmodifiziertes Material nach Anspruch 3, **dadurch gekennzeichnet, dass** dabei das Massenverhältnis von Tris-(2,4-di-tert-butyl)-phospit und Pentaerythrittetrakis(3-(3,5-di-tert-butyl-4-hydroxyphenyl)propionat) 1:1 beträgt.

5. Polypropylenmodifiziertes Material nach Anspruch 1 oder 2, **dadurch gekennzeichnet, dass** es sich bei dem Nukleierungsmittel um 1,3:2,4-Bis(3,4-Dimethylobenzylideno)Sorbitol handelt.

6. Polypropylenmodifiziertes Material nach Anspruch 1 oder 2, **dadurch gekennzeichnet, dass** es sich bei dem Fließfähigkeitsmodifizierer um einen PETS-Fließfähigkeitsmodifizierer handelt.

7. Herstellungsverfahren für das polypropylenmodifizierte Material nach einem der Ansprüche 1 bis 6, **dadurch gekennzeichnet, dass** es das Vermischen des Homo-Polypropylens, des Polypropylen-Copolymeren, des Polyolefin-Elastomeren, des Polyethylens, des Nukleierungsmittels, des Antioxidationsmittels und des Fließfähigkeitsmodifizierers mit jeweils den oben genannten Gewichtsprozenten und das gleichmäßige Verrühren der erhaltenen Mischung, und dann die Gewinnung des polypropylenmodifizierten Materials nach dem Schmelzen, Weichmachen und Abkühlen der erhaltenen Mischung umfasst.

8. Herstellungsverfahren für das polypropylenmodifizierte Material nach Anspruch 7, **dadurch gekennzeichnet, dass** die Schmelz- und Weichmachtemperatur auf einen Wert zwischen 180°C und 300°C eingestellt ist.

9. Herstellungsverfahren für das polypropylenmodifizierte Material nach Anspruch 7, **dadurch gekennzeichnet, dass** das polypropylenmodifizierte Material durch Schmelzen, Weichmachen und Abkühlen der erhaltenen Mischung unter Verwendung eines Einschneckenextruders, eines Doppelschneckenextruders oder eines Einschubextruders erzeugt wird.

10. Herstellungsverfahren für das polypropylenmodifizierte Material nach Anspruch 9, **dadurch gekennzeichnet, dass** die Extrusion des polypropylenmodifizierten Materials mit dem Doppelschneckenextruder erfolgt, wobei die Drehzahl eines Hauptmotors des Doppelschneckenextruders 1100 bis 1300 U/min betragen kann, die Drehzahl einer Beschickungsmaschine des Doppelschneckenextruders 700 bis 900 U/min betragen kann, während die Drehzahl eines Granulators des Doppelschneckenextruders 25 bis 35 U/min betragen kann.

11. Herstellungsverfahren für das polypropylenmodifizierte Material nach Anspruch 10, **dadurch gekennzeichnet, dass** die Drehzahl des Hauptmotors 1200 U/min betragen kann, die Drehzahl der Beschickungsmaschine 800 U/min betragen kann, während die Drehzahl des Granulators 32 U/min betragen kann.

12. Herstellungsverfahren für das polypropylenmodifizierte Material nach Anspruch 9, **dadurch gekennzeichnet, dass** die erhaltene Mischung nacheinander einen Füllzylinder des Doppelschneckenextruders mit elf Temperaturzonen durchläuft, nämlich einer ersten Temperaturzone mit einem Temperaturbereich von 180°C bis 185°C, einer zweiten Temperaturzone mit einem Temperaturbereich von 185°C bis 195°C, einer dritten Temperaturzone mit einer Temperatur von 185°C bis 195°C, einer vierten Temperaturzone mit einer Temperatur von 195°C bis 205°C, einer fünften Temperaturzone mit einem Temperaturbereich von 205°C bis 215°C, einer sechsten Temperaturzone mit einem Temperaturbereich von 205°C bis 215°C, einer siebten Temperaturzone mit einer Temperatur von 210°C bis 220°C, einer achten Temperaturzone mit einer Temperatur von 210°C bis 220°C, einer neunten Temperaturzone mit einem Temperaturbereich von 205°C bis 215°C, einer zehnten Temperaturzone mit einer Temperatur von 195°C bis 205°C, und einer elften Temperaturzone mit einer Temperatur von 185°C bis 195°C.

13. Herstellungsverfahren für das polypropylenmodifizierte Material nach Anspruch 9, **dadurch gekennzeichnet, dass** in der ersten Temperaturzone eine Temperatur von 180°C vorherrscht, in der zweiten Temperaturzone eine Temperatur von 190°C vorherrscht, in der dritten Temperaturzone eine Temperatur von 190°C vorherrscht, in der vierten Temperaturzone eine Temperatur von 200°C vorherrscht, in der fünften Temperaturzone eine Temperatur von 210°C vorherrscht, in der sechsten Temperaturzone eine Temperatur von 210°C vorherrscht, in der siebten Temperaturzone eine Temperatur von 215°C vorherrscht, in der achten Temperaturzone eine Temperatur von 215°C vorherrscht, in der neunten Temperaturzone eine Temperatur von 210°C vorherrscht, in der zehnten Temperaturzone eine Temperatur von 200°C vorherrscht, während in der elften Temperaturzone eine Temperatur von 190°C vorherrscht.

14. Gepäckstück, hergestellt aus dem polypropylenmodifizierten Material nach einem der Ansprüche 1 bis 6.

## Revendications

1. Matériau modifié de polypropylène, **caractérisé en ce qu'il** comprend des composants en les pourcentages en poids suivants : 10 à 40 % en poids d'homopolypropylène, 35 à 60 % en poids de copolymère de polypropylène, 5 à 15 % en poids d'élastomère de polyoléfine, 10 à 20 % en poids de polyéthylène, 0,03 à 0,08 % en poids d'agent de nucléation, 0,03 à 0,06 % en poids d'antioxydant, et 2 à 6 % en poids de modificateur de fluidité.

2. Matériau modifié de polypropylène selon la revendication 1, **caractérisé en ce qu'il** comprend des composants en les pourcentages en poids suivants : 15 à 35 % en poids d'homopolypropylène, 40 à 55 % en poids de copolymère de polypropylène, 7 à 11 % en poids d'élastomère de polyoléfine, 12 à 17 % en poids de polyéthylène, 0,04 à 0,06 % en poids d'agent de nucléation, 0,035 à 0,045 % en poids d'antioxydant, et 3 à 5 % en poids de modificateur de fluidité.

3. Matériau modifié de polypropylène selon la revendication 1 ou 2, **caractérisé en ce que** l'antioxydant comprend du phosphite de Tris-(2,4-di-tert-butyle) et du tétrakis-(3-(3,5-di-tert-butyl-4-hydroxyphényl)propionate) de pentaérythritol.

4. Matériau modifié de polypropylène selon la revendication 3, **caractérisé en ce que** le rapport en masse du phosphite de Tris-(2,4-di-tert-butyle) au tétrakis(3-(3,5-di-tert-butyl-4-hydroxyphényl)propionate) de pentaérythritol est de 1/1.

5. Matériau modifié de polypropylène selon la revendication 1 ou 2, **caractérisé en ce que** l'agent de nucléation est le 1,3:2,4-bis(3,4-diméthylobenzylidéno)sorbitol.

6. Matériau modifié de polypropylène selon la revendication 1 ou 2, **caractérisé en ce que** le modificateur de fluidité est le modificateur de fluidité PETS.

7. Procédé de préparation du matériau modifié de polypropylène de l'une quelconque des revendications 1 à 6, **caractérisé en ce qu'il** comprend le mélange ensemble de l'homo-polypropylène, du copolymère de polypropylène, de l'élastomère de polyoléfine, du polyéthylène, de l'agent de nucléation, de l'antioxydant, du modificateur de fluidité, en les pourcentages en poids ci-dessus, et l'agitation uniforme du mélange obtenu, et ensuite l'obtention du matériau modifié de polypropylène après fusion, plastification et refroidissement du mélange obtenu.

8. Procédé de préparation d'un matériau modifié de polypropylène selon la revendication 7, **caractérisé en ce que** la température de fusion et de plastification est contrôlée de façon à être comprise entre 180°C et 300°C.

9. Procédé de préparation d'un matériau modifié de polypropylène selon la revendication 7, **caractérisé en ce que** le matériau modifié de polypropylène est obtenu par fusion, plastification et refroidissement du mélange obtenu via une extrudeuse simple vis, une extrudeuse double vis, ou une extrudeuse enfichable.

10. Procédé de préparation d'un matériau modifié de polypropylène selon la revendication 9, **caractérisé en ce que** le matériau modifié de polypropylène est extrudé par l'extrudeuse double vis, dans laquelle la vitesse de rotation du moteur principal de l'extrudeuse double vis peut être de 1100 à 1300 t/min, la vitesse de rotation de la machine d'alimentation de l'extrudeuse double vis peut être de 700 à 900 t/min, tandis que la vitesse de rotation du granulateur de l'extrudeuse double vis peut être de 25 à 35 t/min.

11. Procédé de préparation d'un matériau modifié de polypropylène selon la revendication 10, **caractérisé en ce que** la vitesse de rotation du moteur principal peut être de 1200 t/min, la vitesse de rotation de la machine d'alimentation peut être de 800 t/min, tandis que la vitesse de rotation du granulateur peut être de 32 t/min.

12. Procédé de préparation d'un matériau modifié de polypropylène selon la revendication 9, **caractérisé en ce que** le mélange obtenu passe successivement dans un cylindre de charge de l'extrudeuse double vis ayant onze zones de température, comprenant une première zone de température ayant une plage de températures de 180°C à 185°C, une deuxième zone de température ayant une plage de températures de 185°C à 195°C, une troisième zone de température ayant une plage de températures de 185 à 195°C, une quatrième zone de température ayant une plage de températures de 195°C à 205°C, une cinquième zone de température ayant une plage de températures de 205°C à 215°C, une sixième zone de température ayant une plage de températures de 205°C à 215°C, une septième zone de température ayant une plage de températures de 210°C à 220°C, une huitième zone de température ayant une plage de températures de 210°C à 220°C, une neuvième zone de température ayant une plage de températures de 205°C à 215°C, une dixième zone de température ayant une plage de températures de 195°C à 205°C, et une onzième zone de température ayant une plage de températures de 185°C à 195°C.

13. Procédé de préparation d'un matériau modifié de polypropylène selon la revendication 12, **caractérisé en ce que** la première zone de température a une température de 180°C, la deuxième zone de température a une température de 190°C, la troisième zone de température a une température de 190°C, la quatrième zone de température a une température de 200°C, la cinquième zone de température a une température de 210°C, la sixième zone de température a une température de 210°C, la septième zone de température a une température de 215°C, la huitième zone de température a une température de 215°C, la neuvième zone de température a une température de 210°C, la dixième zone de température a une température de 200°C, tandis que la onzième zone de température a une température de 190°C.

14. Bagage fait du matériau modifié de polypropylène de l'une quelconque des revendications 1 à 6.
